# EUROPEAN PATENT SPECIFICATION

(11) **EP 0 361 647 B1**
(45) Date of publication and mention of the grant of the patent: **31.08.1994**
(21) Application number: 89306477.4
(22) Date of filing: 26.06.1989
(51) Int. Cl.: G06K 15/00

(54) **Video signal brancher**
Videosignalverzweigungseinrichtung
Dispositif de branchement pour signal vidéo

(30) Priority: 29.09.1988 JP 242241/88
(43) Date of publication of application: 04.04.1990
(73) Proprietor: MITSUBISHI DENKI KABUSHIKI KAISHA, Tokyo 100 (JP)
(72) Inventor: Yoshimoto, Yasuhiro c/o Fukuyama Seisakusho, Fukuyama City Hiroshima Prefecture (JP); Takakuwa, Kiyoshi c/o Fukuyama Seisakusho, Fukuyama City Hiroshima Prefecture (JP)
(74) Representative: Hackett, Sean James

(56) References cited:
- US-A- 4 386 359
- IBM Technical Disclosure Bulletin vol. 20, no. 6, November 1977, pages 2275 -2277; R.K.DEBRY and KIPPENHAN: "Print Authorization Matrix"

## Description

The present invention relates to a video signal brancher that is connected to a printer or the like.

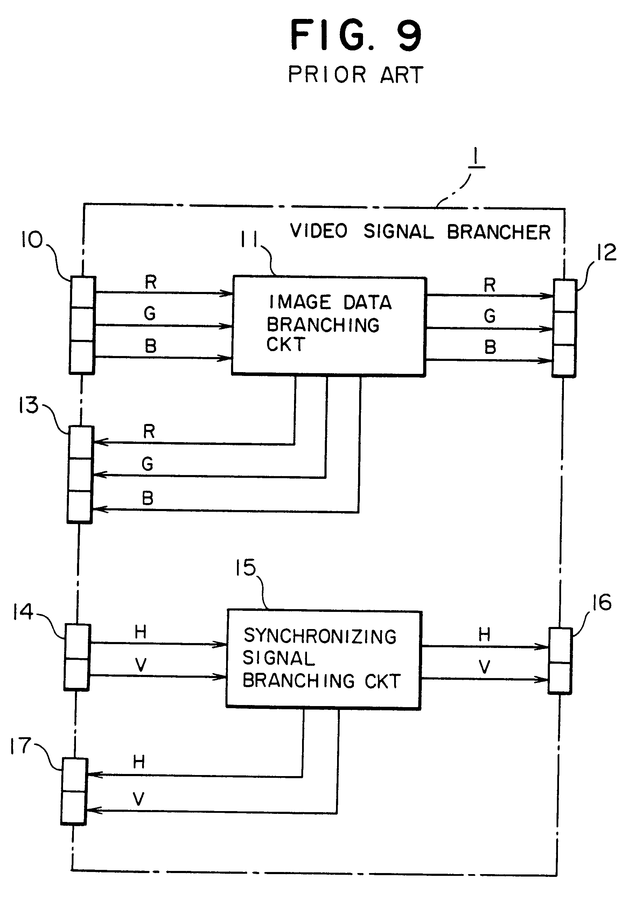

The conventional constitution will now be described in conjunction with Fig. 9 which is a block diagram that illustrates a conventional video signal brancher.

In Fig. 9, the video signal brancher (1) is constituted by an image data input terminal (10), an image data branching circuit (11) connected to the image data input terminal (10), a first image data output terminal (12) connected to the image data branching circuit (11), a second image data output terminal (13) connected to the image data branching circuit (11), a synchronizing signal input terminal, a synchronizing signal branching circuit (15) connected to the synchronizing signal input terminal (14), a first synchronizing signal output terminal (16) connected to the synchronizing signal branching circuit (15), and a second synchronizing signal output terminal (17) connected to the synchronizing signal branching circuit (15). There are image data signal lines for each of the chrominance signals (R, G, B), and there are signal lines for each of the synchronizing signals (horizontal H, vertical V).

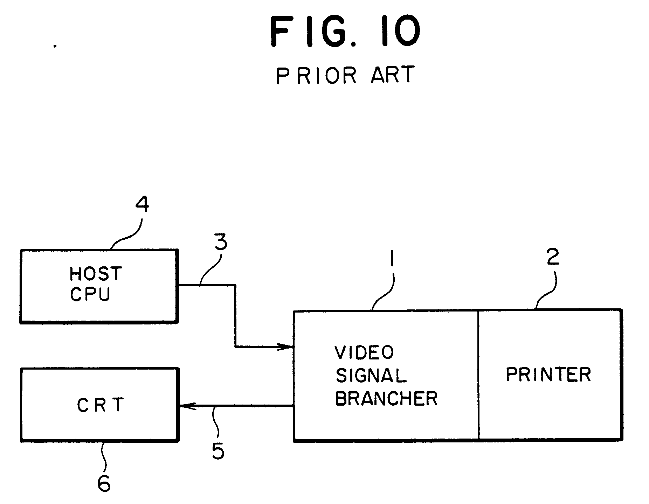

Operation of the above-mentioned conventional example will now be described in conjunction with Fig. 10 which is a block diagram illustrating the condition where the conventional video signal brancher (1) is being used.

In Fig. 10, a printer (2) is connected to the first image data output terminal (12) and to the first synchronizing signal output terminal (16) of the video signal brancher (1), a host computer (4) is connected to the image data input terminal (10) and to the synchronizing signal input terminal (14) of the video signal brancher (1) through a cable (3), and a CRT (6) is connected to the second image data output terminal (13) and to the second synchronizing signal output terminal (17) of the video signal brancher (1) through a cable (5).

There are many kinds of connectors at both ends of the cables (3) and (5), and the most suitable video signal brancher (1) is selected out of the corresponding plurality kinds of ones.

The types of connectors include DIN-type, D-subminiature-type, I-type, etc., and the pin numbers include 9 pins, 15 pins and so on.

A parameter of video signals produced from the host computer (4) is set by operation switches such as numeral keys that are not shown but that are provided in the printer (2) and is stored in the printer (2) such that the image data can be printed by the printer (2). This is done since the type of video signals produced by the host computer (4) varies depending upon the manufactures.

The video signals include such types as analog and digital signals, interlace and non-interlace signals, and H.V composite and H.V separate signals. Furthermore, even the video signals of the same type have a parameter that is partly different depending upon the manufactures.

The image data branching circuit (11) branches into the CRT (6) the image data out of the video signals produced from the host computer (4), and further branches to the printer (2) the image data from the host computer (4) to the CRT (6).

The synchronizing signal branching circuit (15) branches to the CRT (6) the horizontal synchronizing signals and vertical synchronizing signals out of the video signals produced from the host computer (4), and further branches them to the printer (2) after having shaped their waveforms. Fig. 9 illustrates the case of the H.V separate signals.

As required, the printer (2) prepares output data and prints them based on a parameter that is set and input, based on image data that are input, and based on horizontal synchronizing signals and vertical synchronizing signals.

With the above-mentioned conventional video signal brancher, however, the video signals were simply branched. When video signals of dissimilar parameters were to be printed by the printer, therefore, the parameters of the video signals all had to be set to the printer each time.

US patent specification 4, 386,359 relates to a light video signal brancher which comprises an image data branching means which branches image data input from an image data terminal. These are sent to a first image data output terminal and to a second image data output terminal. A synchronizing signal branching means branches synchronizing signals input from a synchronizing signal inputs terminal and sends them to a synchronizing signal output terminal. If video signals having different parameters are to be printed by a printer to which the branch is attached, the printer must be exchanged or reprogrammed accordingly.

### SUMMARY OF THE INVENTION

The present invention is to solve the above-mentioned problems, and its object is to obtain a video signal brancher which, when the video signals having dissimilar parameters are to be printed by a printer, enables the video signals to be printed easily, efficiently and vividly without the need of at all changing the printer but by simply exchanging the video signal brancher depending upon the video signals.

According to the present invention, there is provided a video signal brancher for connection to a printer for printing video signal information, the video signal brancher comprising:
image data branching means which branches image data input from image data input terminals and sends them to first image data output terminals and to second image data output terminals;
synchronizing signal branching means which branches synchronizing signals input from synchronizing signal input terminals and sends them to first synchronizing signal output terminals and to second synchronizing signal output terminals; and
parameter storage means for holding parameters of video signals consisting of said image data and synchronizing signals, whereby video signals having dissimilar parameters can be printed by the same printer by exchanging the video signal brancher with one holding the parameters of the video signals to be printed.

According to the embodiments of the present invention, the image data branching means branches the image data that are input from the image data input terminals and sends them to the first image data output terminals and to the second image data output terminals.

Further, the synchronizing signal branching means branches the synchronizing signals input from the synchronizing signal input terminals and sends them to the first synchronizing signal output terminals and to the second synchronizing signal output terminals.

The parameter storage means holds parameters of video signals consisting of the image data and the synchronizing signals, that are used in the printer.

### BRIEF DESCRIPTION OF THE DRAWINGS

Fig. 1 is a block diagram illustrating an embodiment of the present invention;
Fig. 2 is a block diagram illustrating the condition in which the device is used according to a first embodiment, a second embodiment and a third embodiment of the present invention;
Fig. 3 is a block diagram which illustrates a printer that is connected to the first embodiment of the present invention;
Fig. 4 is a wiring diagram illustrating a video interface of the printer;
Fig. 5 is a diagram illustrating a video gain value and a set-up value in the parameters of video signals;
Fig. 6 is a diagram illustrating sampling delay values among the parameters;
Fig. 7 is a diagram showing the number of vertical display start lines, the number of vertical display lines and the polarity of vertical synchronizing signals among the parameters;
Fig. 8 is a diagram which is an enlargement of a portion of Fig. 7 and which illustrates the number of horizontal display start dots, the number of horizontal display dots, the number of horizontal total dots, and the polarity of horizontal synchronizing signals among the parameters;
Fig. 9 is a block diagram of a conventional video signal brancher; and
Fig. 10 is a block diagram showing the condition in which the conventional video signal brancher is used.

In the drawings, the same reference numerals represent the same or corresponding portions.

### DESCRIPTION OF THE PREFERRED EMBODIMENTS

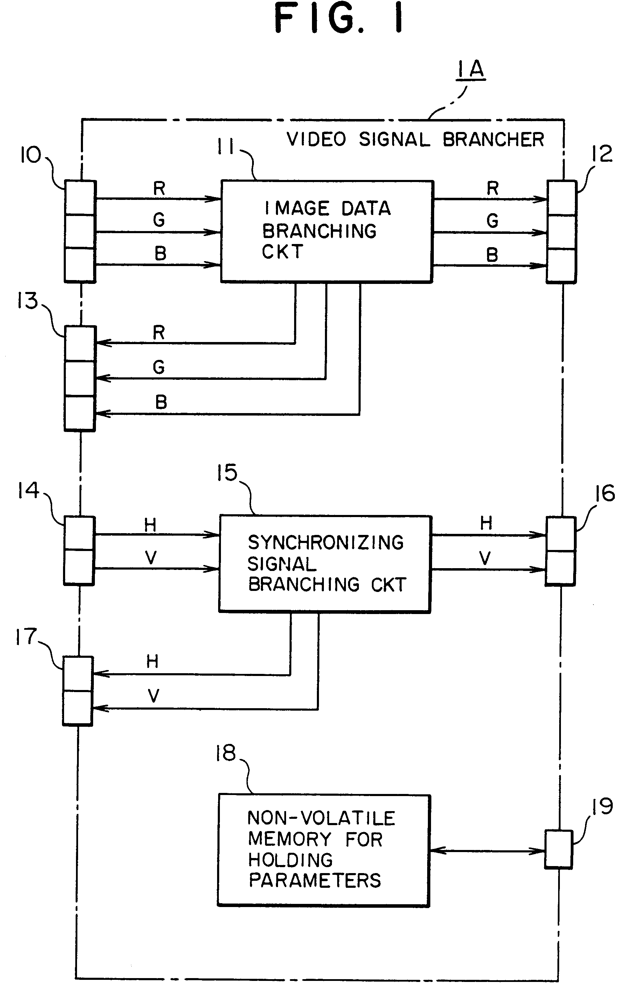

Constitution of a first embodiment will now be described in conjunction with Fig. 1 which is a block diagram that illustrates the first embodiment of the present invention, and wherein the image data input terminals (10) through up to the second synchronizing signal output terminals (17) are quite the same as those of the above-mentioned conventional brancher.

In Fig. 1, a video signal brancher (1A) consists of image data input terminals (10) through up to second synchronizing signal output terminals (17), a non-volatile memory (EEP-ROM) (18) for holding rewritable parameters, and a parameter input/output terminal (19) connected to the non-volatile memory (18) that holds parameters. According to the first embodiment of the present invention, the image data branching means, the synchronizing signal branching means and the parameter storage means are the image data branching circuit (11), the synchronizing signal branching circuit (15) and the non-volatile memory (18) for holding parameters, respectively.

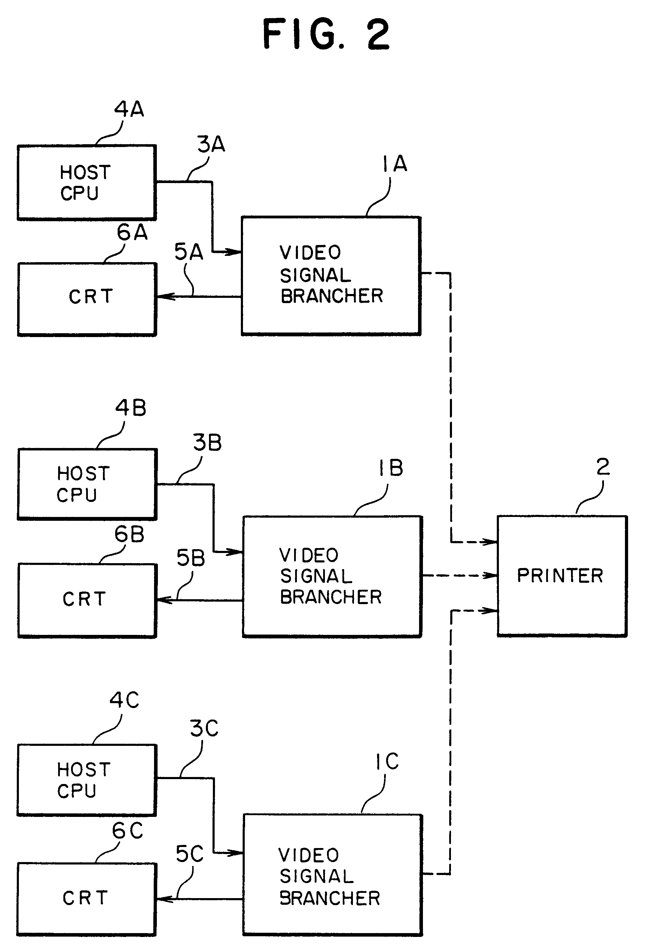

Next, the condition in which the brancher of this embodiment is used will be described with reference to Fig. 2 which is a block diagram showing the condition where the brancher is used according to the first embodiment, second embodiment and third embodiment of the present invention.

In Fig. 2, the video signal brancher (1A) is connected to a host computer (4A) and to a CRT (6A) via A1 cable (3A) and A2 cable (5A).

Further, the video signal brancher (1B) is connected to a host computer (4B) and to a CRT (6B) via B1 cable (3B) and B2 cable (5B).

The video signal brancher (1C) is connected to a host computer (4C) and to a CRT (6C) via C1 cable (3C) and C2 cable (5C).

Here, the host computer (4A) produces a video signal in which the image data consists of an analog interlace signal and the synchronizing signal consists of an H.V separate signal. The host computer (4B) produces a video signal in which the image data consists of an analog non-interlace signal and the synchronizing signal consists of an H.V composite signal. Furthermore, the host computer (4C) produces a video signal in which the image data consists of a digital interlace signal and the synchronizing signal consists of an H.V composite signal.

The video signal branchers (1A), (1B) and (1C) have image data input terminals, synchronizing signal input terminals, second image data output terminals and second synchronizing signal output terminals corresponding to connectors of the cables, and hold parameters that correspond to video signals. Depending upon the kind of video signals, the parameters are written by a parameter writing device that is not shown onto the non-volatile memory (18) that holds the parameters. The parameters can be rewritten even by the printer (2).

When the video signals are to be printed, the operator needs only connect the video signal brancher (1A), (1B) or (1C) to the printer (2).

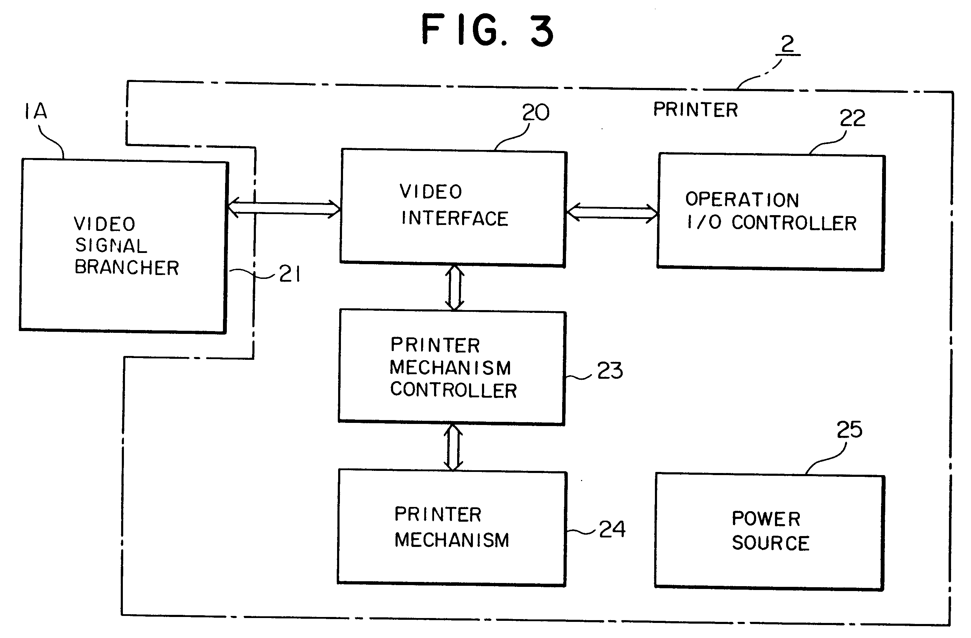

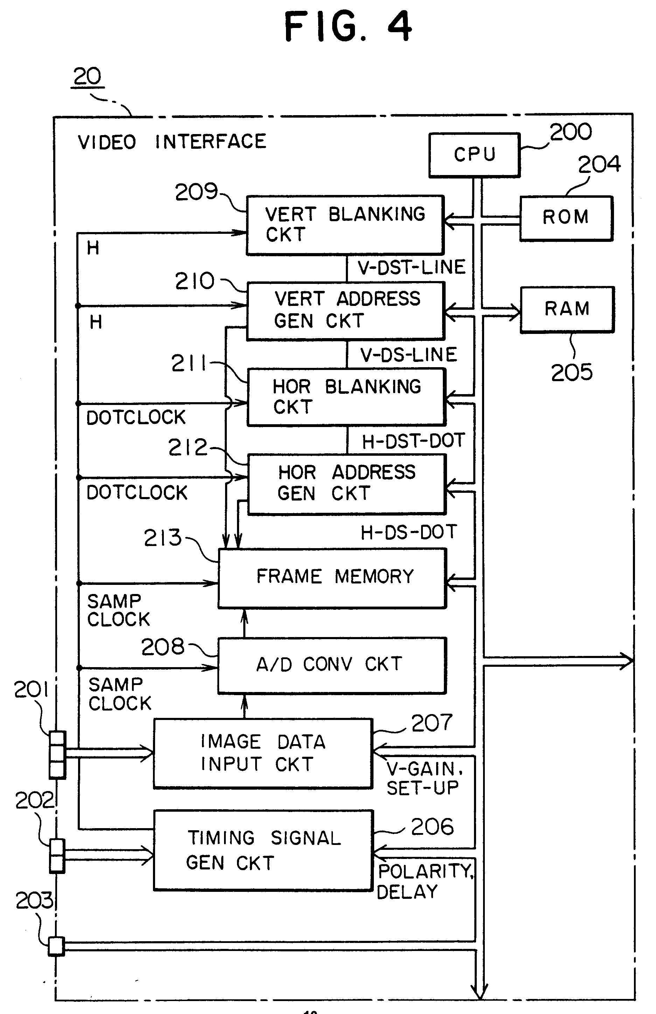

Constitution of the printer (2) will now be described with reference to Figs. 3 and 4. Fig. 3 is a block diagram showing the printer (2), and Fig. 4 is a wiring diagram showing the video interface (20).

In Fig. 3, the printer (2) is constituted by a video interface (20) connected to the video signal brancher (1A) that is inserted in a recessed portion (21) in a housing of the printer (2), an operation input/output controller (22) connected to the video interface (20), a printer mechanism controller (23) connected to the video interface (20), a printer mechanism (24) connected to the printer mechanism controller (23), and a power source (25).

In Fig. 4, the video interface (20) is constituted by a CPU (200), image data input terminals (201), synchronizing signal input terminals (202), a parameter input terminals (203), a ROM (204) connected to the CPU (200), a RAM (205) connected to the CPU (200), a timing signal generating circuit (206) connected to the CPU (200) and to the synchronizing signal input terminals (202), an image data input circuit (207) connected to the CPU (200) and to the image data input terminals (201), an A/D converter circuit (208) connected to the timing signal generating circuit (206) and to the image data input circuit (207), a vertical blanking circuit (209) connected to the CPU (200) and to the timing signal generating circuit (206), a vertical address generating circuit (210) connected to the CPU (200), to the timing signal generating circuit (206) and to the vertical blanking circuit (209), a horizontal blanking circuit (211) connected to the CPU (200), to the timing signal generating circuit (206) and to the vertical address generating circuit (210), a horizontal address generating circuit (212) connected to the CPU (200), to the timing signal generating circuit (206) and to the horizontal blanking circuit (211), and a frame memory (213) connected to the CPU (200), to the timing signal generating circuit (206), to the A/D converter circuit (208), to the vertical address generating circuit (210) and to the horizontal address generating circuit (212).

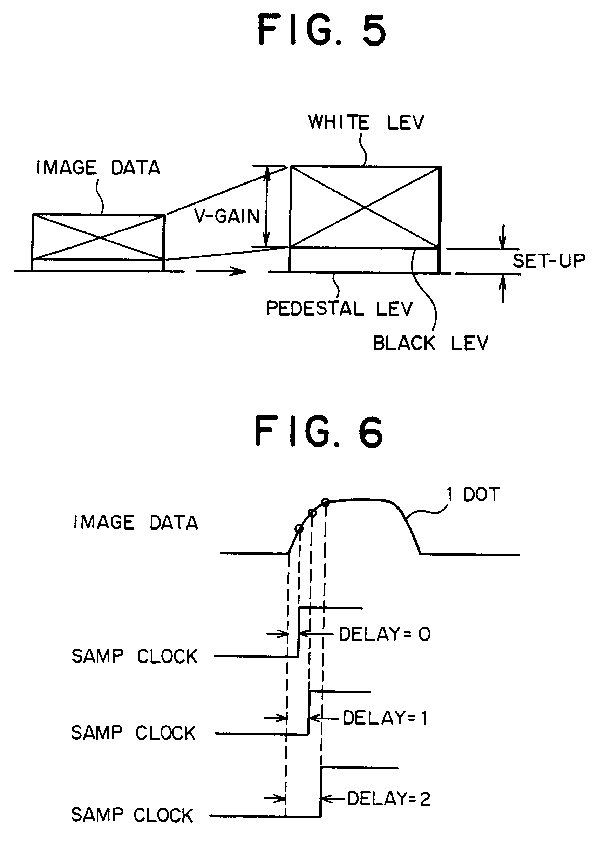

Operation of the printer (2) and, particularly, operation of the video interface (20) will now be described with reference to Figs. 5 to 8 which illustrate parameters of video signals.

When the power source (25) rises, first, the CPU (200) reads the parameter of video signals from the parameter-holding non-volatile memory (18) of the video signal brancher (1A) via parameter input/output terminals (19) and parameter input terminal (203), and writes it onto the RAM (205).

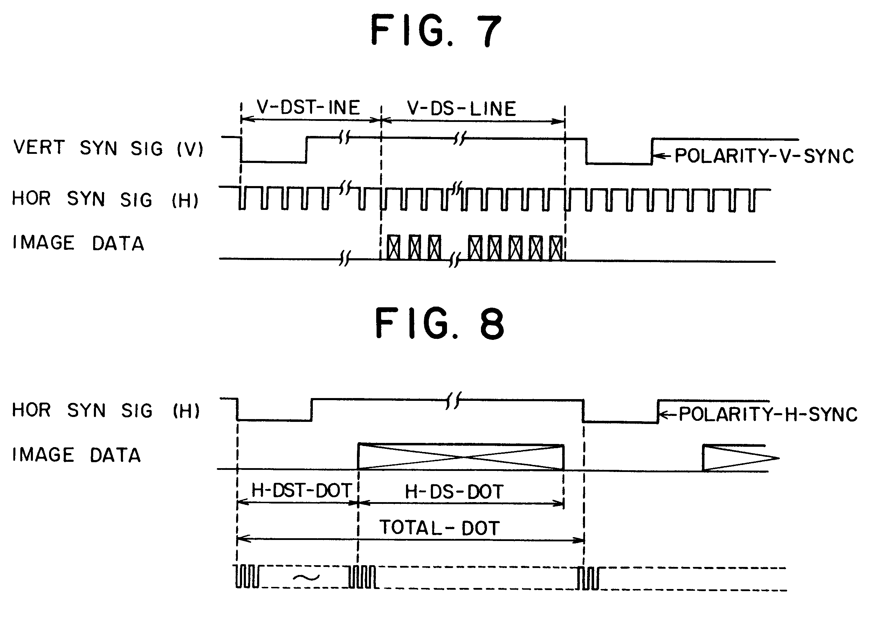

Here, the parameters include video gain values [V-GAIN] of the colors R, G. B in the image data and set-up values [SET-UP] as shown in Fig. 5, sampling delay values [DELAY] (a unit DELAY 1 represents, for example, 6 ns) as shown in Fig. 6, the number of vertical display start lines [V-DST-LINE], the number of vertical display lines [V-DS-LINE] and the polarity [POLARITY-V-SYNC] of vertical synchronizing signals (which is negative in Fig. 7) as shown in Fig. 7, and the number of horizontal display start dots H-DST-DOT], the number of horizontal display dots [H-DS-DOT], the number of horizontal total dots [TOTAL-DOT] and the polarity [POLARITY-H-SYNC] of horizontal synchronizing signals (which is negative in Fig. 8) as shown in Fig. 8.

The CPU (200) then supplies the parameters written onto the RAM (205) to each of the circuits in the video interface (20). That is, the parameters [POLARITY-V-SYNC, POLARITY-H-SYNC and DELAY] are supplied to the timing signal generating circuit (206), the parameters [V-GAIN and SET-UP] are supplied to the image data input circuit (207), the parameter [V-DST-LINE] is supplied to the vertical blanking circuit (209), the parameter [V-DS-LINE] is supplied to the vertical address generating circuit (210), the parameter [H-DST-DOT] is supplied to the horizontal blanking circuit (211), and the parameter [H-DS-DOT] is supplied to the horizontal address generating circuit (212).

In response to the parameters [POLARITY-V-SYNC, POLARITY-V SYNC and DELAY], the timing signal generating circuit (206) generates various timing signals from the vertical and horizontal synchronizing signals that are input via the synchronizing signal input terminals (202), and supplies them to each of the circuits.

In response to the parameters [V-DST-LINE and V-DS-LINE] and the horizontal synchronizing signal, the vertical blanking circuit (209) and the vertical address generating circuit (210) generate vertical address and supply it to the frame memory (213). In response to the parameters [H-DST-DOT and H-DS-DOT] and DOT CLK, on the other hand, the horizontal blanking circuit (211) and the horizontal address generating circuit (212) generate horizontal address and supply it to the frame memory (213).

In response to the parameters [V-GAIN and SET-UP], the image data input circuit (207) processes the image data input through the image data input terminals (201) in a manner as shown in Fig. 5, and supplies it to the A/D converter circuit (208).

The A/D converter circuit (208) subjects the image data to the A/D conversion in response to the sampling clock and supplies it to the frame memory (213).

The frame memory (213) writes digital image data based on vertical and horizontal addresses and on sampling clocks.

As required, thereafter, the image data written onto the frame memory (213) are printed.

Based on the parameters held in the video signal branchers, the printer (2) picks up image data from various video signals.

According to the present invention as described above, video signals having dissimilar parameters are printed by the printer without the need of at all changing the side of the printer but by simply exchanging the video signal brancher to meet the video signals. Therefore, the printer prints the video signals easily, efficiently and vividly.

## Claims

1. A video signal brancher (1A) for connection to a printer for printing video signal information, the video signal brancher comprising:
image data branching means (11) which branches image data input from image data input terminals (10) and sends them to first image data output terminals (12) and to second image data output terminals (13);
synchronizing signal branching means (15) which branches synchronizing signals input from synchronizing signal input terminals (14) and sends them to first synchronizing signal output terminals (16) and to second synchronizing signal output terminals (17); and
parameter storage means (18) for holding parameters of video signals consisting of said image data and synchronizing signals, whereby video signals having dissimilar parameters can be printed by the same printer by exchanging the video signal brancher with one holding the parameters of the video signals to be printed.

2. A video signal brancher and printer combination comprising a video signal brancher according to claim 1, and a printer, wherein the printer (2) comprises read means (20, 22) for reading the parameters of video signals from the parameter storage means (18) of the video signal brancher (1A, 1B, 1C) and control means (23, 24) for controlling the printer (2) to print output data corresponding to the video signals in dependence upon the parameters.

## Patentansprüche

1. Videosignalverzweiger (1A) zur Verbindung mit einem Drucker zum Drucken von Videosignalinformation, wobei der Videosignalverzweiger folgendes aufweist:
- eine Bilddaten-Verzweigungseinrichtung (11), die von Bilddaten-Eingangsanschlüssen (10) her eingegebene Bilddaten verzweigt und diese zu ersten Bilddaten-Ausgangsanschlüssen (12) und zu zweiten Bilddaten-Ausgangsanschlüssen (13) schickt;
- eine Synchronisierungssignal-Verzweigungseinrichtung (15), die von Synchronisierungssignal-Eingangsanschlüssen (14) her eingegebene Synchronisierungssignale verzweigt und diese zu ersten Synchronisierungssignal-Ausgangsanschlüssen (16) und zu zwei ten Synchronisierungssignal-Ausgangsanschlüssen (17) schickt; und
- eine Parameterspeichereinrichtung (18) zum Speichern von Parametern von Videosignalen, die aus den Bilddaten und Synchronisierungssignalen bestehen, so daß Videosignale mit unterschiedlichen Parametern durch Austauschen des Videosignalverzweigers gegen einen Videosignalverzweiger, in dem die Parameter der zu druckenden Videosignale gespeichert sind, von demselben Drucker gedruckt werden können.

2. Kombination aus einem Videosignalverzweiger und einem Drucker, die einen Videosignalverzweiger nach Anspruch 1 und einen Drucker aufweist,
wobei der Drucker (2) eine Leseeinrichtung (20, 22) zum Auslesen der Parameter von Videosignalen aus der Parameterspeichereinrichtung (18) des Videosignalverzweigers (1A, 1B, 1C) und eine Steuereinrichtung (23, 24) zum Steuern des Druckers (2) aufweist, um Ausgangsdaten, entsprechend den Videosignalen, in Abhängigkeit von den Parametern zu drucken.

## Revendications

1. Dispositif de branchement (1A) pour signal vidéo pour connexion à une imprimante imprimant une information de signal vidéo, le dispositif de branchement pour signal vidéo comprenant :
un moyen de branchement de données d'image (11) qui branche des données d'image appliquées à partir de bornes d'entrée de données d'image (10) et les transmet à des premières bornes, de sortie de données d'images (12) et à des secondes bornes de sortie de données d'images (13);
des moyens de branchement de signaux de synchronisation (15) qui branchent des signaux de synchronisation appliqués à partir de bornes d'entrée de signaux de synchronisation (14) et les transmet à des premières bornes de sortie de signaux de synchronisation (16) et à des secondes bornes de sortie de signaux de synchronisation (17); et
un moyen de stockage de paramètres (18) pour maintenir des paramètres de signaux vidéo comprenant lesdites données d'image et lesdits signaux de synchronisation, de la sorte des signaux vidéo ayant des paramètres dissemblables peuvent être imprimés par la même imprimante en échangeant le dispositif de branchement de signaux vidéo avec l'un maintenant les paramètres des signaux vidéo à imprimer.

2. Combinaison d'un dispositif de branchement de signaux vidéo et d'une imprimante comprenant un dispositif de branchement de signaux vidéo selon la revendication 1, et une imprimante, dans laquelle l'imprimante (2) comprend des moyens de lecture (20, 22) pour lire les paramètres de signaux vidéo du moyen du stockage de paramètres (18) du dispositif de branchement de signaux vidéo (1A, 1B, 1C) et un moyen de commande (23, 24) pour commander l'imprimante (2) à imprimer des données de sortie correspondant aux signaux vidéo suivant les paramètres.
